# EUROPEAN PATENT SPECIFICATION

(11) **EP 4 184 300 B1**
(45) Date of publication and mention of the grant of the patent: **02.07.2025**
(21) Application number: 22847988.7
(22) Date of filing: 23.05.2022
(51) Int. Cl.: G06F 1/16, G06F 3/0488, G06V 40/13

(54) **LIGHT SPOT DISPLAY METHOD, ELECTRONIC DEVICE, AND COMPUTER READABLE STORAGE MEDIUM**
LICHTPUNKTANZEIGEVERFAHREN, ELEKTRONISCHE VORRICHTUNG UND COMPUTERLESBARES SPEICHERMEDIUM
PROCÉDÉ D'AFFICHAGE DE POINT LUMINEUX, DISPOSITIF ÉLECTRONIQUE ET SUPPORT DE STOCKAGE LISIBLE PAR ORDINATEUR

(30) Priority: 29.07.2021 CN 202110866214
(43) Date of publication of application: 24.05.2023
(73) Proprietor: Honor Device Co., Ltd., Shenzhen, Guangdong 518040 (CN)
(72) Inventor: CUI, Chuang, Shenzhen, Guangdong 518040 (CN)
(74) Representative: Isarpatent
(86) International application number: PCT/CN2022/094459
(87) International publication number: WO 2023/005376

(56) References cited:
- WO-A1-2019/104551
- CN-A- 106 873 849
- CN-A- 108 521 864
- CN-A- 110 036 397
- CN-A- 110 088 769
- CN-A- 112 200 128
- CN-A- 114 489 410
- US-A1- 2013 135 258
- US-A1- 2018 224 999
- US-A1- 2019 370 525

## Description

### TECHNICAL FIELD

This disclosure relates to the field of optical fingerprint recognition technologies, and in particular, to a flare display method, an electronic device, and a computer-readable storage medium.

### BACKGROUND

A fingerprint recognition technology is to recognize fingerprint information by using a fingerprint recognition module to sense and analyze a signal of a fingerprint's valley and ridge. Currently, based on different principles of fingerprint imaging, the fingerprint identification technologies mainly fall into three types: capacitive fingerprint identification, optical fingerprint identification, and ultrasonic fingerprint identification. The optical fingerprint recognition technology has advantages such as a strong penetrating ability, and supporting a full screen, and is widely applied to electronic devices.

Under-screen fingerprint recognition is implemented by using an optical fingerprint recognition technology. A principle of the under-screen fingerprint recognition is to use a photoelectric reflection technology. When a finger presses a screen, the screen will form a flare with specific luminance in a fingerprint detection region, for example, the luminance is as high as 800 nit to 1000 nit; light of the flare passes through a glass cover plate and reaches the finger, and then is reflected by the finger to generate reflected light; because the reflected light is different due to different textures of fingers, the reflected light passes through the screen and returns to a fingerprint sensor under the screen; and the fingerprint sensor obtains a fingerprint image to implement fingerprint recognition.

However, if the ambient light is dim, the luminance of the flare may cause a damage to a human eye when the flare is displayed due to an accidental touch of the finger.
CN 112200128 A relates to a fingerprint collection method, device, electronic device, and storage medium, primarily used in electronic devices with under-screen fingerprint technology.
WO 2019/104551 relates to a fingerprint identification method and terminal device that adapt to varying ambient light intensities, allegedly enhancing fingerprint recognition accuracy across different lighting conditions.

### SUMMARY

The object of the present invention is to provide a flare display method, an electronic device, and a computer-readable storage medium, to resolve a problem that a damage is caused to a human eye due to a high-luminance flare in a dark environment. A disclosed technical solution is as follows. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this application provides a flare display method, applied to an electronic device, according to claim 1.

According to a second aspect according to the invention, this application further provides an electronic device, according to claim 12.

According to a third aspect according to the invention, this application further provides a computer-readable storage medium, according to claim 13.

According to a fourth aspect not claimed, this application further provides a computer program product. When the computer program product is run on an electronic device, the electronic device is enabled to perform the flare display method according to the first aspect or any implementation of the first aspect.

### BRIEF DESCRIPTION OF DRAWINGS

To describe technical solutions in embodiments of this application or in the conventional technology more clearly, the following briefly describes accompanying drawings required for describing embodiments or the conventional technology. Apparently, the accompanying drawings in the following description show some embodiments of this invention, and a person of ordinary skill in the art may still derive other drawings from these accompanying drawings without creative efforts.
FIG. 1 is an example diagram of a flare display process according to an embodiment of this application;
FIG. 2 is a schematic diagram of a structure of an electronic device according to an embodiment of this application;
FIG. 3 is a schematic flowchart of a flare display process in a related technology;
FIG. 4A - FIG.4B are a flowchart of a flare display method according to an embodiment of this application;
FIG. 5A-FIG. 5B are a schematic diagram of a transmission path of a fingerprint event and ambient light data of the flare display method shown in FIG. 4 A - FIG.4B;
FIG. 6 is a schematic diagram based on a hysteresis range and a light intensity level according to an embodiment of this application;
FIG. 7A-FIG. 7B are a flowchart of another flare display method according to an embodiment of this application;
FIG. 8 is a schematic diagram of a transmission path of a fingerprint event and ambient light data of the flare display method shown in FIG. 7 A-FIG. 7B; and
FIG. 9 is a schematic diagram of a structure of a flare display apparatus according to an embodiment of this application.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

In the specification, claims, and accompanying drawings of this application, the terms "first", "second", and "third", and the like are intended to distinguish between different objects but not to limit a particular order.

In an embodiment of this application, the word such as "as an example" or "for example" is used to represent giving an example, an illustration, or a description. Any embodiment or design scheme described as an "as an example" or "for example" in an embodiment of this application should not be explained as being more preferred or having more advantages than another embodiment or design scheme. To be precise, the use of the word such as "example" or "for example" is intended to present a related concept in a specific manner.

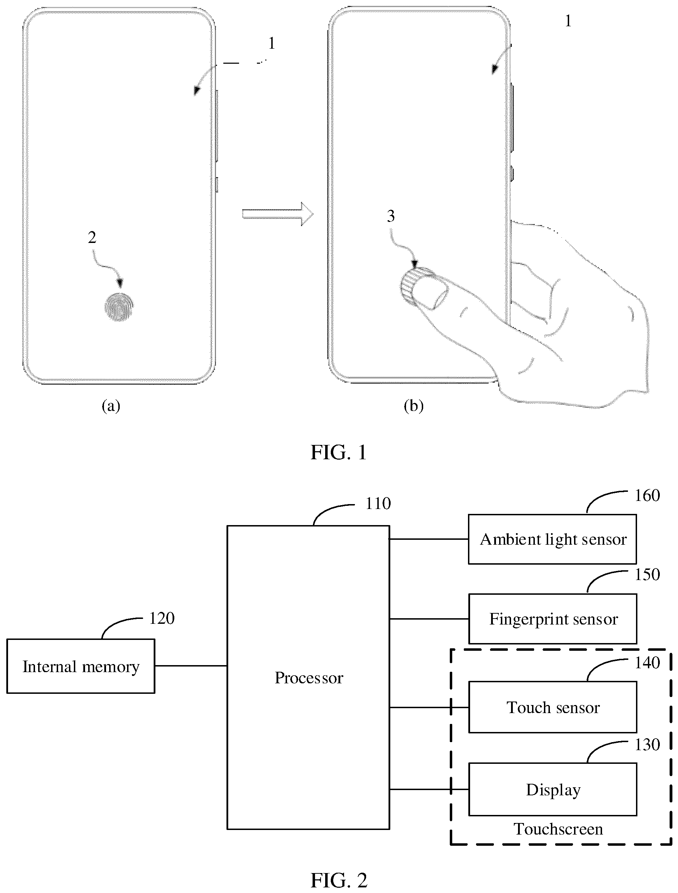

FIG. 1 is an example diagram of a flare display process according to an embodiment of this application. In this example, a mobile phone is used as an example to describe an under-screen fingerprint recognition process.

As shown in FIG. 1, a display area of a display 1 includes a fingerprint detection region 2, and when a finger presses the fingerprint detection region 2, the display 1 displays a flare 3 with sufficient luminance in the fingerprint detection region 2 (as shown in (b) in FIG. 1).

As shown in (b) in FIG. 1, if the finger does not completely cover the flare 3, light emitted from a flare region that is not covered by the finger (that is, an oblique portion shown in (b) in FIG. 1) may cause a damage to a human eye.

In a related technology, a solution to a damage caused to the human eye due to a flare in a dark environment is to directly reduce luminance of the flare when it is detected that a current environment is a dark environment. In a process of studying this application, the inventor finds that the solution still has the following problems:

First, the luminance of the flare cannot be reduced indefinitely. If it is in a particularly dark environment, for example, in a room where a light is not turned on at night, a flare whose luminance is reduced still causes a damage to the human eye. Second, to obtain a clear fingerprint image, this solution prolongs a display duration of the flare while reducing the luminance of the flare; that is, this solution prolongs the duration of the human eye in such a dazzling environment, and also causes a damage to the human eye.

The inventor has broken through such an inertial way of thinking for resolving the problem that the flare is too bright to reduce the flare luminance, and proposed a flare display method provided in this application. In this method, a pressing area of a finger pressing a fingerprint detection region is obtained after a fingerprint event is detected, and a first-type fingerprint event is generated if the pressing area is greater than or equal to a first threshold and less than a second threshold. Intensity of the ambient light is further detected. If the ambient light is at the first light intensity level, current ambient light is relatively dark, and a current pressing operation may cause a flare light leakage phenomenon. In this case, the first-type fingerprint event is directly intercepted, that is, a procedure of displaying the flare is not triggered. Therefore, the solution resolves the problem that light leakage in a flare region in the dark environment causes a damage to the human eye.

An electronic device to which the foregoing flare display method is applied may be a mobile phone (as shown in FIG. 1), a tablet computer, a hand-held computer, a netbook, a personal digital assistant (Personal Digital Assistant, PDA), a wearable electronic device, or the like. A specific form of a hand-held electronic device to which an under-screen fingerprint recognition technology is applied is not particularly limited in this application.

FIG. 2 is a schematic diagram of a structure of an electronic device according to an embodiment of this application.

As shown in FIG. 2, the electronic device may include a processor 110, an internal memory 120, a display 130, a touch sensor 140, a fingerprint sensor 150, and an ambient light sensor 160.

It can be understood that the structure shown in this embodiment does not constitute a specific limitation on the electronic device. In some other embodiments, the electronic device may include more or fewer components than those shown in the figure, or combine some components, or split some components, or have different component arrangements. The illustrated components may be implemented by using hardware, software or a combination of software and hardware.

A processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent devices, or may be integrated into one or more processors.

The controller may be a nerve center and a command center of the electronic device. The controller can generate an operation control signal based on instruction operation codes and a timing signal, and complete the control of fetching and executing instructions.

The processor 110 may be further provided with a memory for storing instructions and data. In some embodiments, the memory in the processor 110 is a cache. The memory can store an instruction or data that the processor 110 has just used or used cyclically. If the processor 110 needs to use the instruction or data again, the instruction or data can be directly invoked from the memory. Repeated access is avoided, and a waiting time of the processor 110 is reduced, thereby improving system efficiency.

In some embodiments, the processor 110 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a bidirectional synchronous serial bus, and includes a serial data line (serial data line, SDA) and a serial clock line (derial clock line, SCL). In some embodiments, the processor 110 may include a plurality of groups of I2C buses. The processor 110 may be coupled to a fingerprint sensor 150, a touch sensor 140, and the like by using different I2C bus interfaces. For example, the processor 110 may be coupled to the touch sensor 140 by using an I2C interface, so that the processor 110 communicates with the touch sensor 140 by using the I2C bus interface, thereby implementing a touch function of the electronic device.

The MIPI interface may be configured to connect the processor 110 to peripheral devices such as the display 130. The MIPI interface includes a display serial interface (display serial interface, DSI) and the like. In some embodiments, the processor 110 and the display 130 communicate with each other by using the DSI interface, to implement a display function of the electronic device.

The GPIO interface may be configured by using software. The GPIO interface may be configured as a control signal interface, or may be configured as a data signal interface. In some embodiments, the GPIO interface may be configured to connect the processor 110 to the display 130, the touch sensor 140, the fingerprint sensor 150, and the like. The GPIO interface may alternatively be configured as an I2C interface, an I2S interface, a UART interface, an MIPI interface, or the like. The UART interface is a universal serial data bus used for asynchronous communication.

It can be understood that the interface connection relationship between the modules illustrated in embodiments is merely an example for description, and does not constitute a limitation on the structure of the electronic device. In some other embodiments of this application, the electronic device may alternatively use an interface connection mode that is different from those in the foregoing embodiments, or use a combination of a plurality of interface connection modes.

The internal memory 120 may be configured to store computer executable program code. The executable program code may include an operating system, an application required by at least one function (for example, a sound play function or an image play function), and the like. The executable program code includes an instruction. The processor 110 runs the instruction stored in the internal memory 120, so that the electronic device performs various function applications and data processing. For example, in this embodiment, the processor 110 may enable the electronic device to perform the flare display method provided in this application by executing the instruction stored in the internal memory 120.

The internal memory 120 may include a program storage area and a data storage area. The stored program area may store computer-executable program code. The data storage area can store data (for example, audio data or a phone book) created during use of the electronic device. In addition, the internal memory 120 may include a high-speed random access memory, and may further include a non-volatile memory, such as at least one magnetic disk storage device, a flash memory device, or a universal flash storage (universal flash storage, UFS).

The electronic device implements a display function by using the GPU, the display screen 130, the application processor, and the like. The GPU is an image processing microprocessor, which is connected to the display 130 and the application processor. The GPU is configured to perform mathematical and geometric calculations to render graphics. The processor 110 may include one or more GPUs that execute program instructions to generate or change display information.

The display 130 is configured to display an image, a video, and the like. The display 130 includes a display panel.

A series of graphical user interface (graphical user interface, GUI) may be displayed on the display 130 of the electronic device, and all these GUIs are on a home screen of the electronic device. Generally, a size of the display screen 130 of the electronic device is fixed, and only a limited quantity of controls can be displayed on the display screen 130 of the electronic device. A control is a GUI element. The control is a software component included in an application, and controls all data processed by the application and an interaction operation related to the data. A user may interact with the control through direct manipulation (direct manipulation), so as to read or edit information about the application. Generally, controls may include visual interface elements such as icons, buttons, menus, tabs, text boxes, dialog boxes, status bars, navigation bars, and widgets.

For example, in the embodiment of this application, the display 130 may prompt the user with a fingerprint recognition prompt icon in a fingerprint collection region, such as a fingerprint pattern displayed in the fingerprint detection region 2 shown in (a) in FIG. 1.

In this embodiment of this application, the display screen 130 needs to be used as a light source for fingerprint detection. Therefore, the display panel of the display screen 130 uses a self-luminous display panel, and the self-luminous display panel may control each display pixel (also referred to as a display unit) to separately emit light.

In the embodiment of this application, the display pixel in a self-luminous display is controlled to emit light with specific luminance, so that a flare with specific luminance is displayed in the fingerprint detection region, and light emitted by the flare serves as the light source for the fingerprint detection.

For example, the self-light emitting display may include, but is not limited to: an organic light-emitting diode (organic light-emitting diode, OLED), an active-matrix organic light emitting diode (active-matrix organic light emitting diode, AMOLED), a flex light-emitting diode (flex light-emitting diode, FLED), a mini LED, a micro LED, a micro-OLED, a quantum dot light emitting diode (quantum dot light emitting diodes, QLED), and the like. In some embodiments, the electronic device may include one or N displays 130, where N is a positive integer greater than 1.

The touch sensor 140 is also referred to as a "touch sensor panel", a "touch device" or a "touch sensor chip". The touch sensor 140 may be disposed on the display 130, and the touch sensor 140 and the display 130 form a touchscreen, which is also referred to as a "touch-controlled screen". The touch sensor 140 is configured to detect a touch operation performed on or near the touch sensor 140. The touch sensor 140 can transmit a detected touch operation to the application processor to determine a type of a touch event. The display 130 may be configured to provide a visual output related to the touch operation.

In some other embodiments, the touch sensor 140 may alternatively be disposed on a surface of the electronic device, which is different from the position of the display 130.

The fingerprint sensor 150 is configured to collect a fingerprint. The electronic device can use the collected fingerprint characteristics to implement fingerprint-based unlocking, application lock accessing, fingerprint-based photographing, fingerprint-based incoming call answering, and the like.

In the embodiment of this application, the under-screen fingerprint recognition technology is adopted, the light emitted by the flare is irradiated as the light for fingerprint detection onto a finger above the display, and after the light is reflected and scattered by the finger, the fingerprint detection light carrying fingerprint information is obtained, and the fingerprint detection light is transmitted through the display 130 to the fingerprint sensor 150 under the screen. The fingerprint sensor 150 receives the fingerprint detection light and converts the fingerprint detection light into a corresponding electrical signal, to form a fingerprint image signal.

The fingerprint sensor 150 may use an optical fingerprint sensor. The optical fingerprint sensor may be disposed under the self-luminous display, to receive the fingerprint detection light carrying the fingerprint information, and the fingerprint detection light is transmitted to an optical sensing array in the optical fingerprint sensor for optical fingerprint imaging, and is converted into the corresponding electrical signal, namely, the fingerprint image signal.

The ambient light sensor 160 is configured to sense luminance of ambient light. The electronic device can adaptively adjust luminance of the display 130 based on the sensed luminance of the ambient light. The ambient light sensor 160 can also be configured to automatically adjust white balance during photographing. The ambient light sensor 160 can further cooperate with the optical proximity sensor to detect whether the electronic device is in a pocket, to prevent an accidental touch.

For example, in the embodiment of this application, the ambient light sensor 160 is configured to sense the ambient light luminance of the environment in which the electronic device is located, and the electronic device decides, based on the ambient light luminance and with reference to a pressing area of a touch operation detected by a touch sensor, whether to respond to the touch operation.

In addition, an operating system runs on the foregoing components, for example, For example, the Harmony OS developed by Huawei, the iOS operating system developed by Apple, the Android open source operating system developed by Google, and the Windows operating system developed by Microsoft. An application may be installed and run on the operating system.

An operating system of the electronic device may use a layered architecture, an event-driven architecture, a microkernel architecture, a micro-service architecture, or a cloud architecture. In this embodiment of this application, an Android system with a hierarchical architecture is used as an example to describe a software architecture of an electronic device 100.

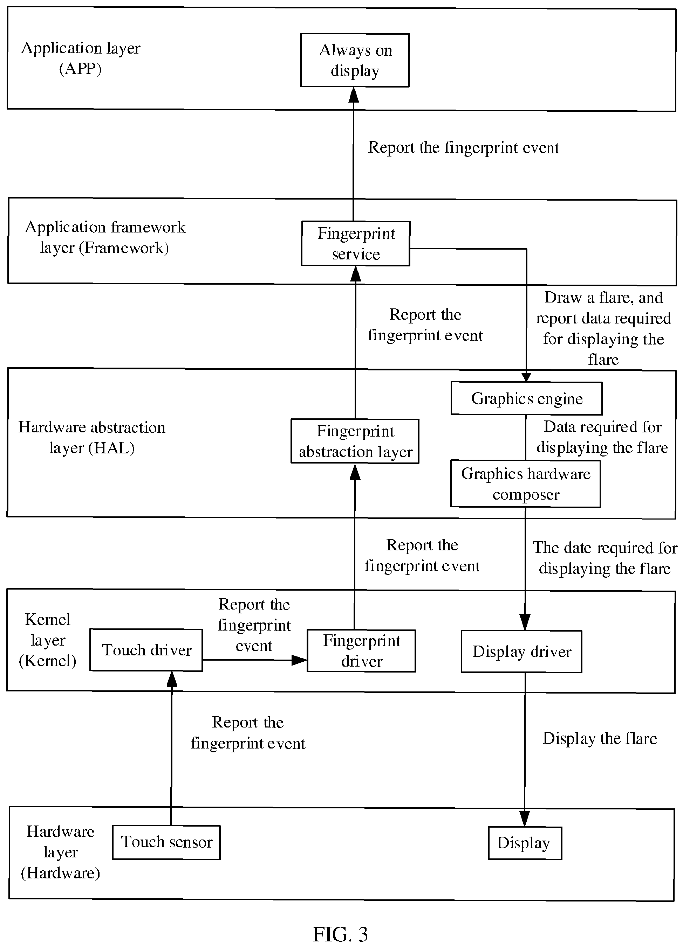

FIG. 3 is a block diagram of a software architecture of an electronic device in a fingerprint recognition scenario according to an embodiment of this application.

A software layered architecture of the electronic device divides software into several layers, and each layer has a clear function and division of labor. The layers communicate with each other by using a software interface. The Android system is used as an example. In some embodiments, the Android system is divided into four layers: an application layer (application, APP), an application framework layer (Framework), a hardware abstraction layer (hardware abstraction layer, HAL), and a kernel layer (Kernel).

The application layer may include a series of application packages. In this embodiment of this application, the application package may include an application related to fingerprint recognition, such as fingerprint recognition. For example, fingerprint recognition can be used to implement fingerprint-based unlocking, application lock accessing, fingerprint-based photographing, fingerprint-based incoming call answering.

The application layer may further include an always on display (always on display, AOD) application, which is mainly used to display time and notification content when the electronic device is in an always on display state. The user does not need to light the screen to see information such as time and notification, thereby saving power consumption of the electronic device.

The application framework layer (Framework) provides an application programming interface (application programming interface, API) and a programming framework for applications at the application layer. The application framework layer includes some predefined functions.

In the embodiment of this application, as shown in FIG. 3, the application framework layer may include a fingerprint service, which is also referred to as a fingerprint FWK (fingerprint Framework). The fingerprint service may provide an API related to a fingerprint recognition function for a fingerprint recognition application at the application layer, and provide the fingerprint service for the fingerprint recognition application, to implement the fingerprint recognition function.

The hardware abstraction layer (HAL), or referred to as Android Runtime (Android Runtime), is responsible for scheduling and management of the Android system. The hardware abstraction layer includes a core library and a virtual machine.

The core library includes two parts: a function that needs to be invoked in JAVA language and a core library of the Android.

The application layer and the application framework layer run on the virtual machine. The virtual machine executes JAVA files at the application layer and the application framework layer as binary files. The virtual machine is configured to implement functions such as object lifecycle management, stack management, thread management, security and exception management, and garbage collection.

A system library may include a plurality of function modules, for example, a fingerprint HAL (fingerprint HAL), a graphics engine (surface flinger), and a graphics hardware composer (hardware composer).

The fingerprint abstraction layer is used to report a fingerprint event to the fingerprint service at the application framework layer.

The graphics engine is an engine for drawing graphics. For example, in this embodiment of this application, the graphics engine is configured to draw, at a logic display layer, a layer used to display a flare.

The graphics hardware composer is a driver abstraction layer of a dedicated chip for layer compositing. For example, in this embodiment of this application, the graphics hardware composer is configured to connect a graphics engine and a display driver, that is, the graphics hardware composer is a communication bridge between the graphics engine and the display driver, so that a layer drawn by the graphics engine is transmitted to the display driver for display.

The kernel layer includes a system layer security mechanism, memory management, a file system, process management, a network stack, and a series of driver modules. The kernel layer is a layer between software and hardware, and provides interaction with the hardware.

The driver module at the kernel layer is used to obtain data reported by one or more sensors at the hardware layer (Hardware), process the data, and report a processing result to the hardware abstraction layer.

In the embodiment of this application, the driver module at least includes a display driver and a sensor driver; and the sensor driver includes a touch sensor driver, also referred to as a touch panel driver (touch panel driver), a fingerprint sensor driver, also referred to as a fingerprint driver (fingerprint driver), and an ambient light sensor driver.

In the embodiment of this application, the hardware layer may include hardware modules such as a touch sensor and a display, and the touch sensor and the display constitute a touchscreen. For another example, the hardware layer may further include an ambient light sensor.

The following illustrates an example of a working procedure of software and hardware of an electronic device in a flare display process in a related technology with reference to FIG. 3.

After the touch sensor detects a touch operation in which a finger presses a fingerprint detection region, a fingerprint event is generated, and the fingerprint event is reported layer by layer through the following path: the touch sensor -> a touch driver -> a fingerprint driver -> a fingerprint abstraction layer -> a fingerprint service.

The fingerprint service processes flare display logic, and draws layers for displaying a flare: a flare layer and a mask layer. A display driver controls, based on data required for displaying the flare, namely, flare layer data, mask layer data, and fingerprint scenario marking information, the display to be lighted and to display the flare layer and the mask layer, that is, to display the flare on the display.

It should be noted that although the Android system is used as an example for description in this embodiment of this application, a basic principle thereof is also applicable to an electronic device based on an operating system such as the Harmony (Harmony), the iOS, or the Windows.

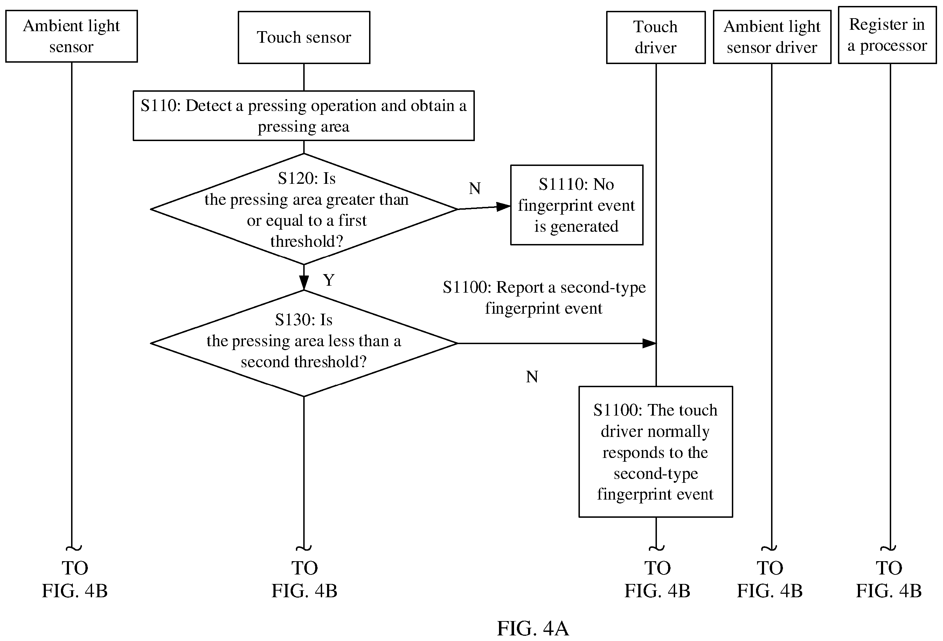

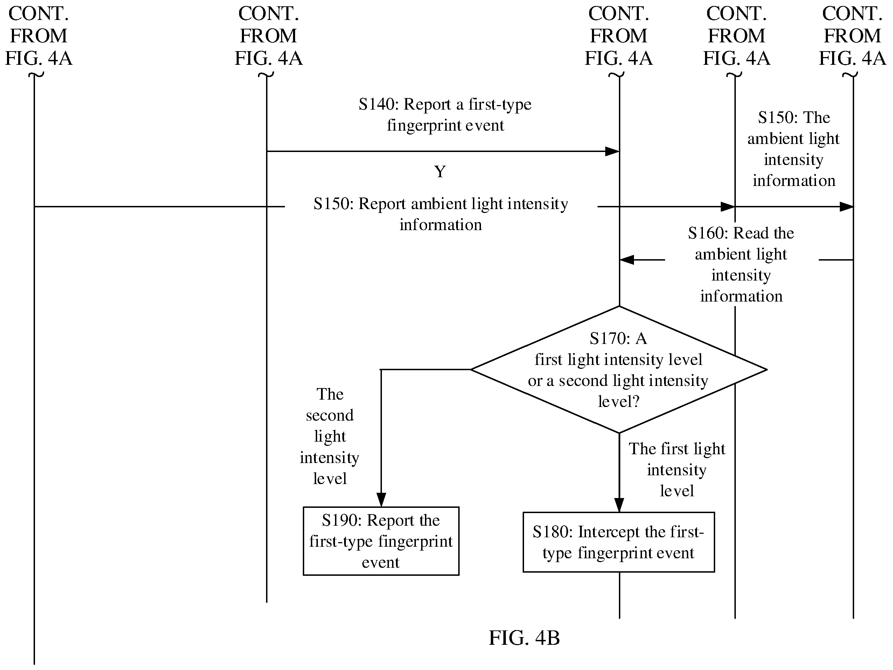

FIG. 4 A - FIG.4B are a flowchart of a flare display method according to an embodiment of this application. This embodiment is applicable to an application scenario in which a processor can temporarily store ambient light intensity transmitted by an ambient light sensor. In the application scenario, a touch driver determines, based on a pressing area of the pressing operation and with reference to ambient light intensity of an electronic device, whether to respond to a pressing operation.

As shown in FIG. 4 A - FIG.4B, the method may include the following steps.

S110: The touch sensor detects a pressing operation in the fingerprint detection region, and obtains a pressing area corresponding to the pressing operation.

A touchscreen includes a touch sensor and a display. After a finger presses the fingerprint detection region of the touchscreen, the touch sensor can detect the finger pressing operation, and then calculate a contact area between the finger and the fingerprint detection region, namely, the pressing area of the pressing operation.

In an example, the pressing area may be a percentage of the contact area between the finger and the fingerprint detection region to an entire fingerprint detection region, namely, a ratio of the contact area to the fingerprint detection region; for example, the contact area accounts for 50% of the entire fingerprint detection region, that is, the pressing area is 50%.

In another example, the pressing area may be the contact area between the finger and the fingerprint detection region, that is, the pressing area is an actual contact area with the fingerprint detection region.

S120: The touch sensor determines whether the pressing area is greater than or equal to a first threshold. If yes, that is, the pressing area is greater than the first threshold, S130 is performed; or if not, that is, the pressing area is less than the first threshold, S1110 is performed.

The first threshold is used to distinguish whether the pressing operation is a misoperation. If the pressing area is greater than or equal to the first threshold, the pressing operation is not a misoperation; or if the pressing area is less than the first threshold, the pressing operation is a misoperation.

For example, a pressing area of the misoperation is usually less than 40%, and the first threshold may be set to 40%. Certainly, the first threshold may be set to another value based on an actual application situation, and details are not described herein.

S130: The touch sensor determines whether the pressing area is less than a second threshold. If yes, that is, the pressing area is greater than the first threshold and less than the second threshold, S140 is performed; or if not, that is, the pressing area is greater than the second threshold, S1100 is performed.

The second threshold is greater than the first threshold, and the second threshold is used to determine whether a flare light leakage phenomenon is caused in this pressing operation. If the pressing area is greater than the second threshold, it indicates that the flare light leakage phenomenon is not caused in this pressing operation, or flare light leakage is very little and can be ignored. If the pressing area is less than the second threshold, it indicates that this pressing operation may cause the flare light leakage phenomenon.

For example, usually, when the pressing area is greater than 80%, a damage caused to the human eye due to the flare light leakage is little or even can be ignored, so that the second threshold may be set to 80%. Certainly, the second threshold may be set to another value based on the actual application situation, and details are not described herein.

S140: The touch sensor reports a first-type fingerprint event to the touch driver.

If the pressing area is greater than the first threshold and less than the second threshold, the first-type fingerprint event is generated and reported to the touch driver.

For example, a current pressing area of this pressing operation is 60%, and this value is greater than or equal to the first threshold (40%) and is less than the second threshold (80%), and it is determined that the pressing operation is not a misoperation, and a normal response to this pressing operation may cause the flare light leakage phenomenon. In this case, the touch sensor generates the first type fingerprint event, and reports the first type fingerprint event to the touch driver.

In a possible implementation, a flag bit representing a type of a fingerprint event may be set in fingerprint event information. For example, when the flag bit is a binary number "1", it indicates that the fingerprint event is the first-type fingerprint event.

A party receiving the fingerprint event parses the flag bit representing a type of the fingerprint event to identify the type of the fingerprint event. For example, after receiving the fingerprint event, the touch driver parses out that the flag bit representing a type of the fingerprint event is "1", and determines that the fingerprint event is the first-type fingerprint event.

S150: An ambient light sensor driver receives ambient light intensity information detected by the ambient light sensor, and writes the ambient light intensity information into an internal register of the processor.

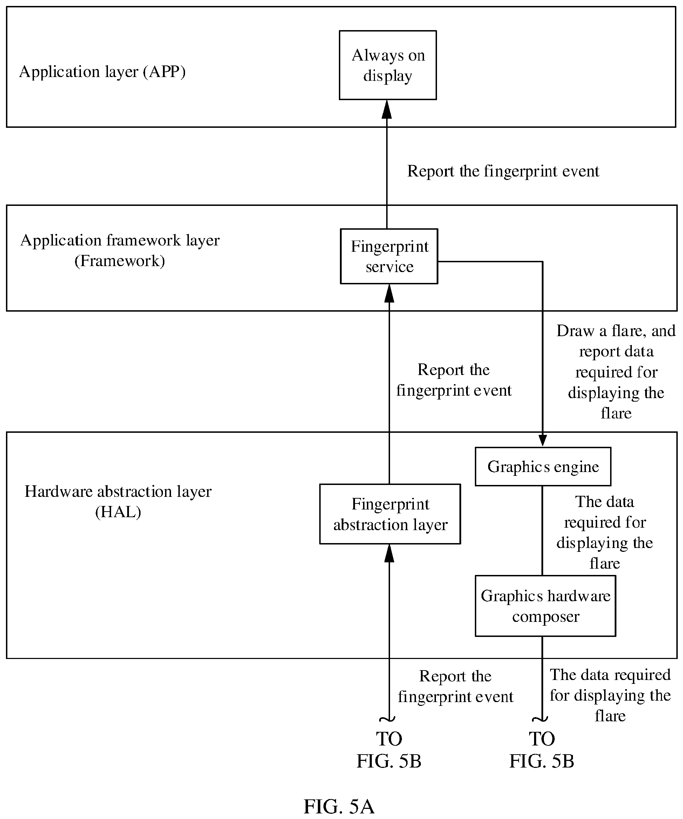

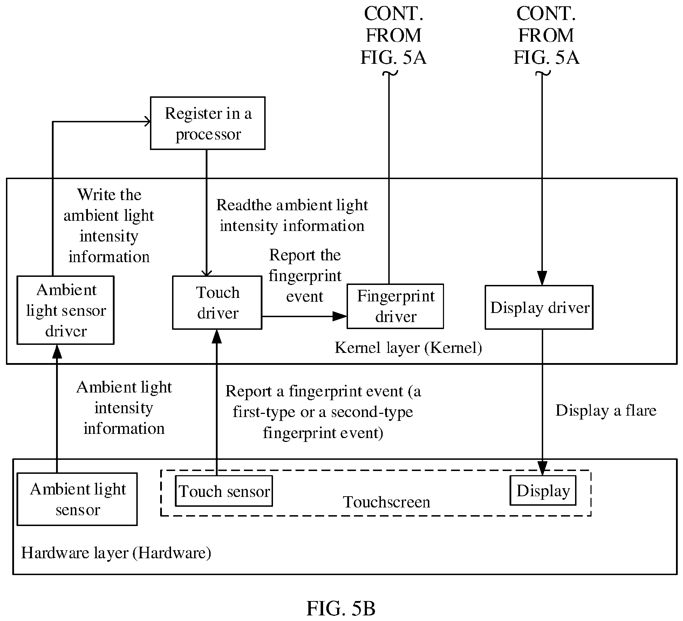

With reference to FIG. 5 A-FIG. 5B, a transmission path of the ambient light intensity information is as follows: the ambient light sensor -> the ambient light sensor driver -> the internal register of the processor -> the touch driver.

In this embodiment, the ambient light intensity information is written into the internal register of the processor by invoking a corresponding interface. In a possible implementation, the interface may be a function interface in an operating system, for example, an interface located at a kernel layer of the Android system. The ambient light sensor driver is located at the kernel layer of the Android system, so that the ambient light intensity information may be written into the register in the processor by invoking the interface.

In addition, an execution sequence of S150 in FIG. 4 A - FIG.4B is merely an example, and S150 may be performed concurrently with another step in FIG. 4 A - FIG.4B. The execution sequence of S150 is not limited in this application.

When a processor (for example, an application processor) is in a sleep state, if the ambient light intensity information is written into the register in the processor, the application processor is awakened to perform the action. To avoid frequent wakeup of the processor, in an example embodiment, an ambient light intensity level may be set, and the application processor is awakened to write the ambient light intensity information into the register in the processor only when the ambient light sensor driver determines that the ambient light intensity level changes. In this way, the frequent wakeup of the processor can be avoided, to save processor resources, and reduce power consumption of an entire electronic device.

In a possible implementation, two light intensity levels may be set (for example, a first light intensity level and a second light intensity level), and a process in which the ambient light sensor reports the ambient light intensity is as follows:

If the ambient light sensor driver detects that the ambient light intensity is converted from the first light intensity level to the second light intensity level, the ambient light intensity information is written into the register in the processor.

If the ambient light sensor driver detects that the ambient light intensity is converted from the second light intensity level to the first light intensity level, the ambient light intensity information is stored in the register in the processor.

In an example embodiment, the ambient light sensor reports the ambient light intensity information to the ambient light sensor driver, and the ambient light sensor driver determines the light intensity level based on a preset ambient light threshold. For example, a threshold is set. If the ambient light intensity is less than the threshold, the light intensity level is the first light intensity level; or if the ambient light intensity is greater than or equal to the threshold, the light intensity level is the second light intensity level.

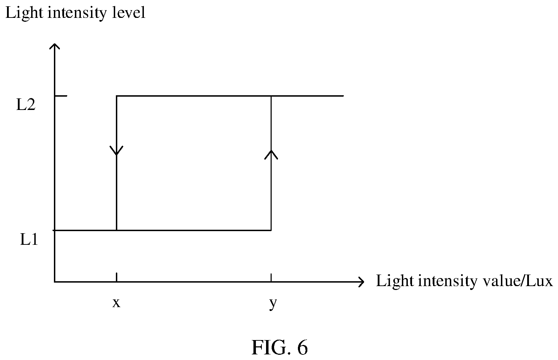

In another example embodiment, to avoid that frequent conversion of the light intensity level determined based on a single threshold causes that the processor is frequently awakened to write the ambient light intensity information, the light intensity level may be determined by using a hysteresis range as shown in FIG. 6. It is assumed that the hysteresis range of an ambient light intensity value is [xLux, yLux], where specific values of x and y may be set based on an actual situation, for example, x=10, y=20, and Lux is a light intensity unit.

As shown in FIG. 6, when the ambient light intensity value is less than a first light intensity threshold (10 Lux), the ambient light is at the first light intensity level L1.

When the ambient light intensity is greater than or equal to a second light intensity threshold (20 Lux), the ambient light is at the second light intensity level L2.

When the ambient light intensity value increases from a value less than 10 Lux to a value greater than or equal to the second light intensity threshold (20 Lux), the ambient light is converted from the first light intensity level L1 to the second light intensity level L2.

When the ambient light intensity value gradually decreases from a value greater than or equal to 20 Lux to a value less than or equal to 10 Lux, the light intensity level of the ambient light changes from L2 to L1.

By using the hysteresis range to determine the light intensity level, the following phenomenon can be avoided: When the light intensity level is determined by only using a specific threshold, the light intensity level changes frequently up and down the threshold, and a procedure of storing the light intensity information is frequently triggered.

In an example embodiment, the ambient light sensor driver directly reports the light intensity level, so that the register only needs to store the light intensity level, and a data amount of the light intensity level is less than a data amount of the light intensity value, thereby saving storage space occupied by the processor to store the light intensity information. For example, if a parameter representing the light intensity information is set to "1", it indicates that the light intensity level is L2; or if the parameter is set to "0", it indicates that the light intensity level is L1.

Certainly, in another embodiment of this application, the ambient light sensor driver may also directly report the light intensity value of the ambient light, and then the touch driver determines the light intensity level of the ambient light based on the light intensity. A data type reported by the ambient light sensor is not specifically limited in this application.

S160: After receiving the first-type fingerprint event, the touch driver obtains the ambient light intensity information.

After receiving the fingerprint event, the touch driver determines that the fingerprint event is the first-type fingerprint event if it is determined through parsing that the flag bit in the fingerprint event information is "1".

An event processing method of the first-type fingerprint event is stored in advance in the touch driver, for example, the method is referred to as a first event processing method. After receiving the first-type fingerprint event, the touch driver performs the first event processing method, that is, reads the ambient light intensity information in the register. For example, the touch driver may invoke the interface at the kernel layer in the Android system to read the ambient light intensity information in the register.

S170: The touch driver determines whether the ambient light is at the first light intensity level or the second light intensity level. If the ambient light is at the first light intensity level, S180 is performed; or if the ambient light is at the second light intensity level, S190 is performed.

The first light intensity level is lower than the second light intensity level. If the ambient light is at the first light intensity level, it indicates that ambient light luminance is relatively low; or if the ambient light is at the second light intensity level, it indicates that the ambient light luminance is relatively high.

In an application scenario, the register in the processor stores a light intensity level. In this scenario, the touch driver only needs to recognize a read light intensity level. For example, if read data is "1", the ambient light is at the second light intensity level; or if read data is "0", the ambient light is at the first light intensity level.

In another application scenario, the register in the processor stores a light intensity value. In this scenario, the touch driver may determine a level corresponding to the light intensity value based on the hysteresis range shown in FIG. 6.

After reading the ambient light intensity information, the touch driver further determines, based on the intensity level of the ambient light, whether to intercept the first-type fingerprint event.

S180: The touch driver intercepts the first-type fingerprint event.

If the ambient light intensity is at the first light intensity level, light in a current environment in which the electronic device is located is relatively dark. In this case, if the flare is displayed, a damage will be caused to the human eye due to the flare light leakage. Therefore, the touch driver does not report the first-type fingerprint event to a fingerprint driver, that is, a procedure of displaying the flare is not triggered, that is, the flare is not lit, and a problem that the flare light leakage dazzles an eye is avoided.

In this embodiment, the first-type fingerprint event is directly intercepted by the touch driver in a relatively dark environment. Therefore, this solution is not only applicable to a flare display method using the fingerprint event transmission path shown in FIG. 3, but also applicable to a flare display solution through the following transmission path: the touch sensor -> the touch driver -> the fingerprint driver -> a display driver -> the display.

S190: The touch driver reports the first-type fingerprint event to the fingerprint driver.

If the ambient light intensity is at the second light intensity level, the light of the current environment in which the electronic device is located is relatively strong. In this case, it is considered that the flare light leakage does not cause the damage to the human eye. Therefore, the touch driver continues to report the first-type fingerprint event to the fingerprint driver, that is, a processing procedure of displaying the flare is normally started.

S1100: The touch sensor reports a second-type fingerprint event to the touch driver, and the touch driver responds to the second-type fingerprint event.

If the pressing area of the pressing operation is greater than the second threshold, the pressing operation does not cause the flare light leakage (or the damage caused to the human eye due to the flare light leakage is very little and can be ignored). In this case, the touch sensor generates the second-type fingerprint event, and reports the second-type fingerprint event to the touch driver, and the touch driver normally responds to the second-type fingerprint event, that is, the processing procedure of displaying the flare is normally started.

The sensor fingerprint sensor receives a fingerprint event, and parses information representing a type of the fingerprint event in the fingerprint event information, such as a flag bit.

For example, the flag bit representing a type of the fingerprint event in the fingerprint event information is set to "0" to indicate that the fingerprint event is the second-type fingerprint event. After receiving the fingerprint event, the touch driver parses out that the flag bit representing a type of the fingerprint event is "0", determines that the fingerprint event is the second-type fingerprint event, and then normally responds to the fingerprint event.

S1110: The touch sensor does not generate a fingerprint event.

If the pressing area of the current pressing operation is less than the first threshold, the current pressing operation is a misoperation, and the current pressing operation is ignored, the touch sensor does not generate a fingerprint event, that is, no fingerprint event is reported to the touch driver.

The flare display method provided in this embodiment is applied to the scenario in which the register in the processor can store the ambient light intensity information. The touch sensor generates different types of fingerprint events based on different pressing areas of pressing operations, that is, when the pressing area is greater than or equal to the first threshold and less than the second threshold, the first-type fingerprint event is generated and reported to the touch driver; the touch driver reads the ambient light intensity from the register in the processor; and if the ambient light is at the first light intensity level, the first fingerprint event is intercepted, that is, the flare display procedure is not started, so as to avoid the damage caused to the human eye due to the flare light leakage in the relatively dark environment. If the ambient light is at the second light intensity level, the fingerprint event continues to be reported to the fingerprint driver, that is, the flare display procedure is normally processed; and if the pressing area is greater than the second threshold, the touch sensor generates the second-type fingerprint event and reports the second-type fingerprint event to the touch driver, and the touch driver reports the second-type fingerprint event to the fingerprint driver, that is, the flare display procedure is normally performed, thereby ensuring response sensitivity of the fingerprint event.

In another application scenario, a processor does not support an ambient light sensor driver to write ambient light intensity information into a register, and an Android system is still used as an example for description. In this application scenario, a touch driver cannot read the ambient light intensity information of an electronic device from the register, and therefore, the touch driver cannot execute different fingerprint event processing logic based on different ambient light intensity information. In this application scenario, the ambient light intensity information can be reported layer by layer to a sensor manager at an application framework layer, and a target application service (for example, a fingerprint service or an always on display application) may read the ambient light intensity information from the sensor manager. Therefore, in this application scenario, the target application executes different fingerprint event processing logic based on different ambient light intensity information.

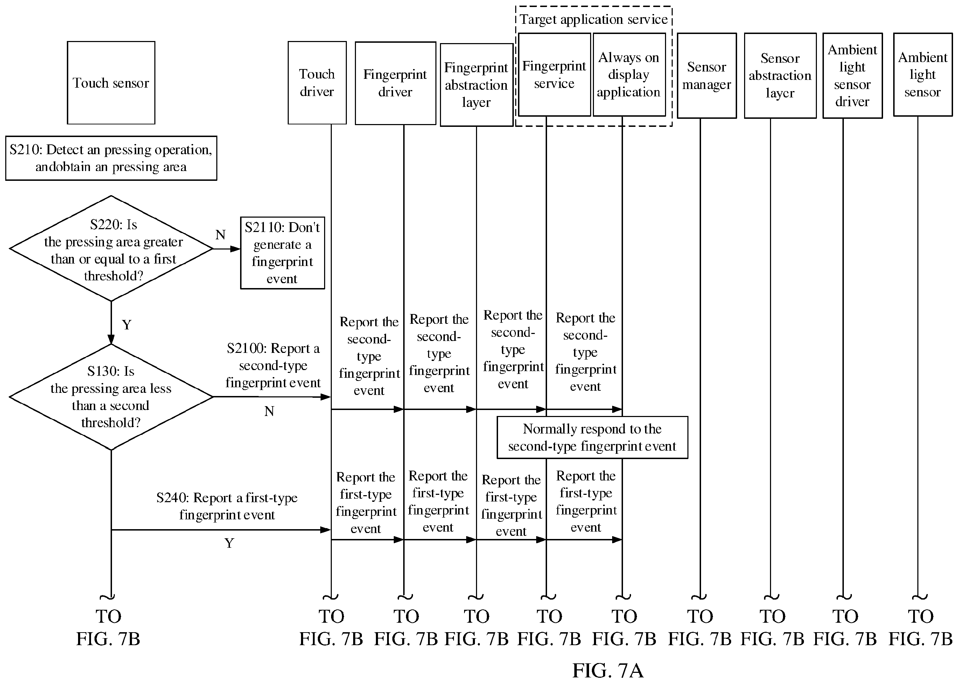

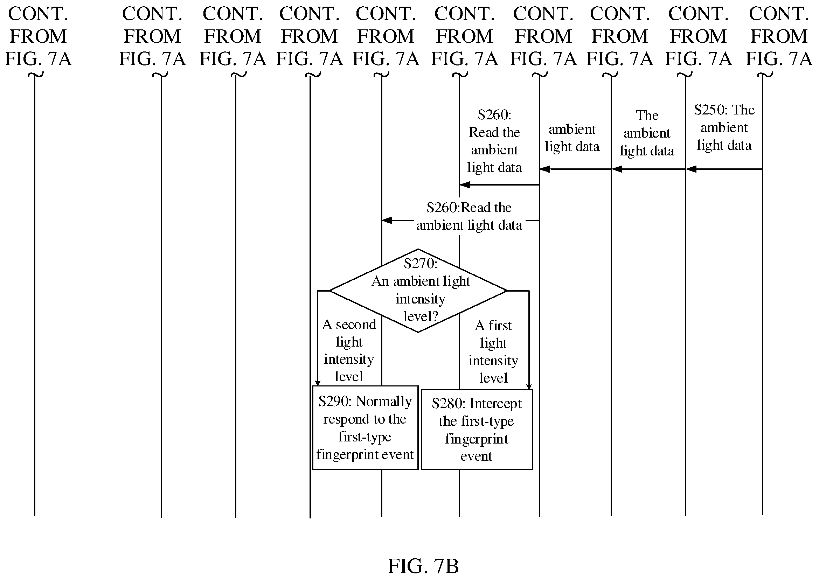

As shown in FIG. 7 A-FIG. 7B, a flare display method in the application scenario may include the following steps.

S210: After detecting a pressing operation in a fingerprint detection region, the touch sensor obtains a pressing area of the pressing operation.

S220: The touch sensor determines whether the pressing area is greater than or equal to a first threshold. If the pressing area is greater than or equal to the first threshold, S230 is performed; or if the pressing area is less than the first threshold, S2110 is performed.

S230: The touch sensor determines whether the pressing area is less than a second threshold. If the pressing area is less than the second threshold, S240 is performed; or if the pressing area is greater than or equal to the second threshold, S2100 is performed.

The second threshold is greater than the first threshold, and the touch sensor determines, based on the second threshold, whether this pressing operation causes a flare light leakage phenomenon. If the pressing area is greater than the first threshold and less than the second threshold, the flare light leakage phenomenon may be caused. If the pressing area is greater than or equal to the second threshold, the flare light leakage phenomenon is not caused.

Meanings and values of the first threshold and the second threshold in this embodiment are the same as those of the first threshold and the second threshold in the embodiment shown in FIG. 4 A - FIG.4B, and details are not described herein again. For example, the first threshold is 40% of a total area of the fingerprint detection region, and the second threshold is 80%.

S240: The touch sensor generates a first-type fingerprint event and reports the first-type fingerprint event layer by layer to the target application service.

If the pressing area (for example, 60%) is greater than the first threshold for example, 40%) and less than the second threshold (for example, 80%), the current pressing operation may cause the flare light leakage phenomenon, and the first-type fingerprint event is generated and reported to an upper-layer target application service.

In an application scenario, the electronic device has an always on display function. In this scenario, the target application service includes the fingerprint service and the always on display application. The touch sensor reports the first-type fingerprint event to the fingerprint service and the always on display application through an event transmission path shown in FIG. 3, and the path is as follows: the touch sensor -> the touch driver -> a fingerprint driver -> a fingerprint abstraction layer -> the fingerprint service -> the always on display APP.

In another application scenario, the electronic device does not have an always on display function. In this scenario, the target application service is the fingerprint service. The touch sensor reports the first-type fingerprint event to the fingerprint service through an event transmission path shown in FIG. 3, and the path is as follows: the touch sensor -> the touch driver -> a fingerprint driver -> a fingerprint abstraction layer -> the fingerprint service.

S250: After detecting a change in ambient light, the ambient light sensor reports the ambient light intensity information to the ambient light sensor driver, and the ambient light sensor driver transmits the ambient light intensity information to the sensor manager.

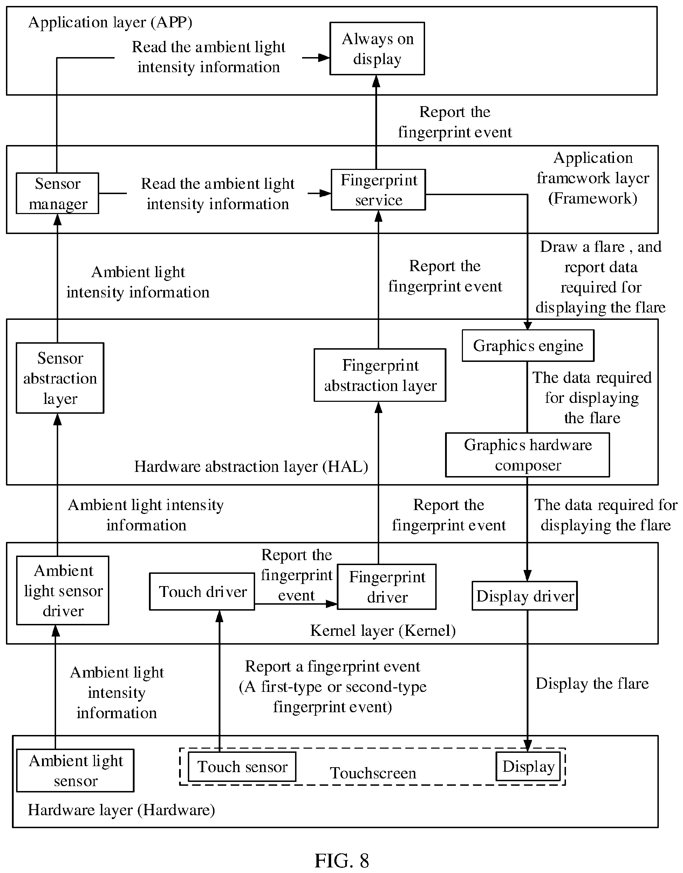

With reference to FIG. 8, a transmission path of the ambient light intensity information (that is, ambient light data) is as follows: the ambient light sensor -> the ambient light sensor driver -> a sensor abstraction layer (sensor HAL) -> the sensor manager (Sensor Manager) -> the fingerprint service or the always on display APP.

The sensor manager is disposed at the application framework layer, and is a manager of all sensors in the electronic device. Data output by the sensors is stored in the sensor manager. When the fingerprint service or the always on display application needs to use data output by the ambient light sensor, an interface of the sensor manager can be invoked to read the ambient light data.

In an embodiment of this application, when the ambient light sensor driver detects a change in a light intensity level of the ambient light data reported by the ambient light sensor, the processor is awakened to transmit the ambient light intensity information to an upper layer.

In an example embodiment, two light intensity levels (for example, a first light intensity level and a second light intensity level) may be set, and if the ambient light sensor detects that the ambient light changes from the first light intensity level to the second light intensity level (or from the second light intensity level to the first light intensity level), the processor is awakened to transmit the ambient light intensity information to the upper layer.

In a possible embodiment, the hysteresis range shown in FIG. 6 may be used to determine whether the light intensity level of the ambient light changes, thereby avoiding that when the light intensity level is determined by only using a specific threshold, the light intensity level changes frequently up and down the threshold, and a procedure of transmitting light intensity information is frequently triggered.

In the embodiment of this application, the ambient light sensor driver may determine a light intensity level corresponding to a current light intensity value based on a set light intensity threshold, and transmit the light intensity level to the upper layer. For example, a binary value "1" represents the light intensity level L2, and "0" represents the light intensity level L1. Alternatively, a light intensity value collected by the ambient light sensor may be directly transmitted upward layer by layer.

In addition, an execution sequence of S250 in FIG. 7 A-FIG. 7B is merely an example, and the process shown in S250 may be performed concurrently with another step in FIG. 7 A-FIG. 7B. The execution sequence of S250 is not limited in this application.

S260: The target application service obtains the ambient light intensity information.

In an application scenario, the always on display application (the always on display application may be an application included in an operating system or a third-party application) is installed in the electronic device, and the target application service is a fingerprint service and an always on display application. In this case, both the fingerprint service and the always on display application read the ambient light intensity information from the sensor manager.

In another application scenario, if no always on display application is installed in the electronic device, the target application service is a fingerprint service. In this case, the fingerprint service reads the ambient light intensity information from the sensor manager.

An event processing method of the first-type fingerprint event is stored in the fingerprint service in advance. After receiving the first-type fingerprint event, the fingerprint service performs the event processing method, invokes the interface of the sensor manager to obtain the ambient light intensity information, and then determines whether to intercept the fingerprint event with reference to the ambient light.

Similarly, the event processing method of the first-type fingerprint event is stored in the always on display application in advance. When receiving the first-type fingerprint event, the always on display application performs the event processing method, obtains the ambient light intensity information from the sensor manager, and determines whether to intercept the fingerprint event with reference to the ambient light.

In a case, if the ambient light sensor fails, the fingerprint service and the always on display application cannot obtain the ambient light intensity information. In this case, to ensure response sensitivity of the fingerprint event, the ambient light intensity is considered to be at the second light intensity level, and the first-type fingerprint event is normally responded to, that is, a flare drawing procedure is performed.

S270: The target application service determines whether the ambient light is at the first light intensity level or the second light intensity level. If the ambient light is at the first light intensity level, S280 is performed; or if the ambient light is at the second light intensity level, S290 is performed.

In a scenario in which the ambient light sensor driver directly reports the light intensity level, the fingerprint service or the always on display application identifies the light intensity level information obtained from the sensor manager. For example, if the obtained light intensity level information is "1", it is determined that the ambient light is at the second light intensity level; or if the obtained light intensity level information is "0", it is determined that the ambient light is at the first light intensity level.

In a scenario in which the ambient light sensor driver directly reports an ambient light intensity value, after the fingerprint service or the always on display application obtains the light intensity value from the sensor manager, the light intensity level needs to be further determined based on a light intensity threshold, for example, the light intensity level is determined by using the hysteresis range shown in FIG. 6.

S280: The target application service intercepts the first-type fingerprint event.

If the ambient light is at the first light intensity level, it indicates that the ambient light is relatively dark, and if a flare is displayed in this case, a phenomenon that flare light leakage dazzles an eye may be caused. The target application service intercepts the first-type fingerprint event in this case.

The fingerprint service intercepts the first-type fingerprint event, that is, does not perform the event processing method corresponding to the first-type fingerprint event, that is, does not perform a processing procedure of drawing a flare.

That the always on display application intercepts the first-type fingerprint event means that an always on display mode is not exited.

S290: The target application service responds to the received first-type fingerprint event.

After the target application service receives the first-type fingerprint event, if the ambient light is at the second light intensity level, it indicates that light in a current environment in which the electronic device is located is relatively strong, and in this case, the flare is displayed without causing a damage to a human eye. In this case, the target application service normally responds to the received first-type fingerprint event. For example, the fingerprint service normally triggers a procedure of displaying the flare; and an always on display service triggers a screen to exit the always on display mode, so that the flare is normally displayed.

S2100: The touch sensor generates a second-type fingerprint event and reports a second-type fingerprint event layer by layer to the target application service.

If the touch sensor determines that the pressing area (for example, 90%) of the current pressing operation is greater than the second threshold (for example, 80%), the current pressing operation does not cause the phenomenon that the flare light leakage dazzles the eye. In this case, the touch sensor generates the second-type fingerprint event and transmits the second-type fingerprint event to the target application service (for example, the fingerprint service and the always on display application, or the fingerprint service) through the path for transmitting the fingerprint event shown in FIG. 8.

The fingerprint service or the always on display application normally responds to the second-type fingerprint event.

The fingerprint service or the always on display application each stores in advance the event processing method corresponding to the second-type fingerprint event. After receiving the second-type fingerprint event, the fingerprint service performs the event processing method, that is, performs the processing procedure of drawing the flare. After receiving the second-type fingerprint event, the always on display application performs the event processing method to exit the always on display mode, so as to display the flare on a display.

S2110: The touch sensor does not generate a fingerprint event.

If the touch sensor detects that the pressing area (for example, 30%) of the current pressing operation is less than the first threshold (for example, 40%), the current pressing operation is a misoperation, and no fingerprint event is generated.

The flare display method provided in this embodiment is applied to a scenario in which the register in the processor does not support to be written in the ambient light intensity information. After detecting the pressing operation, the touch sensor generates different types of fingerprint events based on different pressing areas. When the pressing area is greater than or equal to the first threshold and less than the second threshold, the first-type fingerprint event is generated and reported layer by layer to the target application service, for example, the fingerprint service and the always on display application. After receiving the first-type fingerprint event, the target application service reads the ambient light intensity from the sensor manager, to determine whether to intercept the fingerprint event. If the ambient light is at the first light intensity level, the fingerprint event is intercepted, that is, the flare display procedure is not started, thereby avoiding the damage caused to the human eye due to the flare light leakage in the dark environment. In this solution, the ambient light intensity information is stored by using the sensor manager at the application framework layer, and is not limited by processor hardware. Therefore, an application range of the solution is wider.

Further, if the ambient light is at the second light intensity level, the fingerprint event is normally responded to, that is, the flare is normal displayed. If the pressing area is greater than the second threshold, the touch sensor generates the second-type fingerprint event and reports the second-type fingerprint event to the target application service layer by layer, and the target application service normally responds to the fingerprint event, that is, the flare is normally displayed, thereby ensuring the response sensitivity of the fingerprint event.

The flare display method provided in this application is as follows: The electronic device obtains the pressing area of the pressing operation after detecting the pressing operation in the fingerprint detection region; and the first-type fingerprint event is generated when the pressing area is greater than or equal to the first threshold and less than the second threshold. The ambient light intensity information of the electronic device is further obtained, and if the ambient light intensity level is at the first light intensity level, the first-type fingerprint event is intercepted, so as to avoid the damage caused to the human eye due to the flare light leakage in the dark environment. The foregoing embodiments of the flare display method are described by using the Android system as an example, but should not limit the flare display method of this application. The flare display method provided in this application is also applicable to an electronic device based on another operating system such as the Harmony OS, the iOS, or the Windows. A person skilled in the art may adaptively modify flare display logic in a corresponding operating system based on the flare display method provided in this application and according to application requirements of different operating systems, such as system frameworks of different operating systems and different flare display logic, or adaptively modify the procedure of the flare display method in this application based on a specific function of a function modules in another operating system, to achieve a same technical effect as the flare display method in this application. For example, in another operating system, a procedure of the touch driver may be performed by using a module with a same function as the touch driver, and a procedure of the fingerprint service may be performed by using a module with a same function as the fingerprint service, which will not be listed herein.

In embodiments of this application, the foregoing electronic device may be divided into function modules based on the foregoing method examples. For example, each function module may be obtained through division for a corresponding function, or two or more functions may be integrated into one processing module. The integrated module may be implemented in a form of hardware, or may be implemented in a form of a software function module. It should be noted that module division in embodiments of this application is an example, and is merely logical function division. In actual implementation, there may be another division manner.

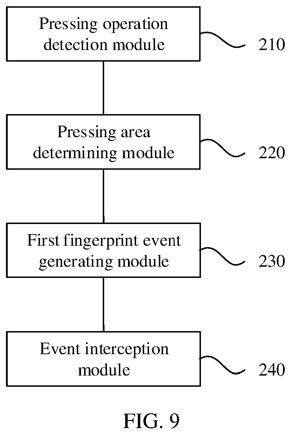

When function modules are divided based on corresponding functions, FIG. 9 is a possible schematic diagram of composition of the flare display apparatus in the foregoing embodiment, and the flare display apparatus can perform steps of any one of the method embodiments of this application. The flare display apparatus is an electronic device or a communication apparatus that supports the electronic device in implementing the method provided in the embodiment, for example, the communication apparatus may be a chip system.

As shown in FIG. 9, the flare display apparatus may include:
a pressing operation detection module 210, configured to detect a pressing operation in a fingerprint detection region;
a pressing area determining module 220, configured to determine a pressing area corresponding to the pressing operation;
a first fingerprint event generating module 230, configured to generate a first-type fingerprint event when the pressing area is greater than or equal to a first threshold and less than a second threshold; and
an event interception module 240, configured to intercept the first-type fingerprint event after it is determined that a light intensity level of an environment in which the electronic device is located is a first light intensity level.

It should be noted that all related content of the steps in the foregoing method embodiments may be cited in function descriptions of corresponding function modules, and details are not described herein again.

The flare display apparatus provided in the embodiment of this application is configured to perform the flare display method in any one of the foregoing embodiments, and therefore, a same effect as that of the flare display method in the foregoing embodiments can be achieved.

An embodiment further provides a computer-readable storage medium, where the computer-readable storage medium includes an instruction, and when the instruction is run on an electronic device, the electronic device is enabled to implement the flare display method provided in any one of the foregoing embodiments.

An embodiment further provides a computer program product including an instruction, when the computer program product runs on an electronic device, the electronic device is enabled to implement the flare display method provided in any one of the foregoing embodiments.

The foregoing descriptions about implementations allow a person skilled in the art to clearly understand that, for the purpose of convenient and brief description, division of the foregoing function modules is used only as an example for illustration. In actual application, the foregoing functions can be allocated to different function modules and implemented according to needs, that is, an inner structure of an apparatus is divided into different function modules to implement all or some of the functions described above. For a specific working process of the system, apparatus and unit described above, reference may be made to a corresponding process in the foregoing method embodiment, and details are not described herein again.

In the several embodiments provided in this embodiment, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, function units in the embodiments may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions in embodiments essentially, or the part contributing to the conventional technology, or all or some of the technical solutions may be embodied in a form of a software product. The computer software product is stored in a storage medium and includes several instructions for instructing a computer device (which may be a personal computer, a server, a network device, or the like) or a processor to perform all or some of the steps of the methods described in all embodiments. The foregoing storage medium includes any medium that can store program code, for example, a flash memory, a removable hard disk, a read-only memory, a random access memory, a magnetic disk, or an optical disk.

The foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A flare display method for limiting the effects of a flare leakage, applied to an electronic device, wherein the method comprises:
detecting (S110), by a touch sensor of the electronic device, a pressing operation in a fingerprint detection region of a finger pressing the finger detection region of the touch sensor;
determining (S120), by the touch sensor, a pressing area of the pressing operation, wherein the pressing area is a contact area between the finger and the finger detection region;
determining (S120), by the touch sensor, whether the pressing area is greater than or equal to a first threshold;
determining (S130), by the touch sensor, whether the pressing area is less than a second threshold;
generating (S140), by the touch sensor, a first-type fingerprint event and reporting the first-type fingerprint event to a touch driver when it is determined that the pressing area is greater than or equal to the first threshold and less than the second threshold; and
intercepting (S180), by the touch driver, the first-type fingerprint event after it is determined that a light intensity level of an environment in which the electronic device is located is a first light intensity level;
reporting (S190), by the touch driver to a fingerprint driver the first-type fingerprint event after it is determined that the light intensity level of the environment in which the electronic device is located is a second light intensity level, wherein the second light intensity level is higher than the first light intensity level; and
generating (S1100), by the touch sensor, a second-type fingerprint event, and reporting, by the touch sensor to the touch driver, the second-type fingerprint event after it is determined that the pressing area is greater than the second threshold.

2. The method according to claim 1, wherein the method further comprises:
skipping (S1110) generating a fingerprint event after it is determined that the pressing area is less than the first threshold.

3. The method according to any one of claims 1 or 2, wherein a process of determining the light intensity level of the environment in which the electronic device is located comprises:
determining ambient light intensity as the first light intensity level if the ambient light intensity of the electronic device is less than a first light intensity threshold;
determining the ambient light intensity as the second light intensity level if the ambient light intensity is greater than or equal to a second light intensity threshold;
determining that the ambient light intensity changes from the first light intensity level to the second light intensity level if the ambient light intensity increases from a value less than the first light intensity threshold to a value greater than or equal to the second light intensity threshold; and
determining that the ambient light intensity changes from the second light intensity level to the first light intensity level if the ambient light intensity decreases from a value greater than or equal to the second light intensity threshold to a value less than or equal to the first light intensity threshold.

4. The method according to claim 3, wherein the method further comprises:
transmitting ambient light intensity information to a receiving end of ambient light data after it is detected that the ambient light intensity is converted from the first light intensity level to the second light intensity level; and
transmitting the ambient light intensity information to the receiving end of the ambient light data after it is detected that the ambient light intensity is converted from the second light intensity level to the first light intensity level.

5. The method according to any one of claims 1 to 4, wherein the electronic device comprises an ambient light sensor and a processor, an operating system of the electronic device is an Android system, the Android system comprises an ambient light sensor driver, and the method further comprises:
collecting, by the ambient light sensor, ambient light intensity information of the electronic device, and transmitting the ambient light intensity information to the ambient light sensor driver; and
writing, by the ambient light sensor driver, the ambient light intensity information into the processor.

6. The method according to claim 5, wherein
the intercepting the first-type fingerprint event after it is determined that a light intensity level of an environment in which the electronic device is located is a first light intensity level comprises:
obtaining, by the touch driver, the ambient light intensity information of the electronic device; and
intercepting, by the touch driver, the first-type fingerprint event if the ambient light intensity information is of the first light intensity level.

7. The method according to claim 6, wherein the obtaining, by the touch driver, the ambient light intensity information of the electronic device comprises:
reading, by the touch driver, ambient light intensity information stored in the processor.

8. The method according to any one of claims 1 to 4, wherein the electronic device comprises an ambient light sensor, an operating system of the electronic device is an Android system, the Android system comprises an ambient light sensor driver, a sensor abstraction layer and a sensor manager, and the method further comprises:
collecting, by the ambient light sensor, ambient light intensity information of the electronic device, and transmitting the ambient light intensity information to the sensor manager through the ambient light sensor driver and the sensor abstraction layer.

9. The method according to claim 8, wherein the Android system further comprises a fingerprint service; and
the intercepting the first-type fingerprint event after it is determined that a light intensity level of an environment in which the electronic device is located is a first light intensity level comprises:
obtaining, by the fingerprint service, the ambient light intensity information of the electronic device from the sensor manager after receiving the first-type fingerprint event; and
intercepting, by the fingerprint service, the first-type fingerprint event if the ambient light intensity information is of the first light intensity level.

10. The method according to claim 8, wherein the Android system further comprises a fingerprint service and an always on display application; and
the intercepting the first-type fingerprint event after it is determined that a light intensity level of an environment in which the electronic device is located is a first light intensity level comprises:
obtaining, by the fingerprint service, the ambient light intensity information of the electronic device from the sensor manager after receiving the first-type fingerprint event;
intercepting, by the fingerprint service, the first-type fingerprint event if the ambient light intensity information is of the first light intensity level;
transmitting, by the fingerprint service, the first-type fingerprint event to the always on display application;
obtaining, by the always on display application, the ambient light intensity information of the electronic device from the sensor manager after receiving the first-type fingerprint event; and
intercepting, by the always on display application, the first-type fingerprint event if the ambient light intensity information is of the first light intensity level.

11. The method according to claim 9 or 10, wherein the obtaining the ambient light intensity information of the electronic device from the sensor manager comprises:
invoking an interface of the sensor manager to read the ambient light intensity information.

12. An electronic device, comprising one or more processors (110), a memory (120), and a touchscreen, wherein the memory is configured to store program code; and the processor is configured to run the program code to enable the electronic device to implement the flare display method according to any one of claims 1 to 11.

13. A computer-readable storage medium, wherein the computer-readable storage medium stores an instruction, and when the instruction is run on an electronic device, the electronic device is enabled to perform the flare display method according to any one of claims 1 to 11.

## Patentansprüche

1. Ein Verfahren zur Anzeige von Lichtreflexen zur Begrenzung der Auswirkungen von Lichtreflexleckagen, angewendet auf ein elektronisches Gerät, wobei das Verfahren umfasst:
Erkennen (S110) einer Druckoperation durch einen Berührungssensor des elektronischen Geräts in einem Fingerabdruckerkennungsbereich eines Fingers, der den Fingererkennungsbereich des Berührungssensors drückt;
Bestimmen (S120) einer Druckfläche der Druckoperation durch den Berührungssensor, wobei die Druckfläche eine Kontaktfläche zwischen dem Finger und dem Fingererkennungsbereich ist;
Bestimmen (S120) durch den Berührungssensor, ob die Druckfläche größer oder gleich einem ersten Schwellenwert ist;
Bestimmen (S130) durch den Berührungssensor, ob die Druckfläche kleiner als ein zweiter Schwellenwert ist;
Erzeugen (S140) eines Fingerabdruckereignisses des ersten Typs durch den Berührungssensor und Melden des Fingerabdruckereignisses des ersten Typs an einen Berührungstreiber, wenn festgestellt wird, dass die Druckfläche größer oder gleich dem ersten Schwellenwert und kleiner als dem zweiten Schwellenwert ist; und
Abfangen (S180) des Fingerabdruckereignisses des ersten Typs durch den Berührungstreiber, nachdem festgestellt wurde, dass die Lichtintensitätsstufe der Umgebung, in der sich das elektronische Gerät befindet, eine erste Lichtintensitätsstufe ist;
Melden (S190) des Fingerabdruckereignisses des ersten Typs durch den Berührungstreiber an einen Fingerabdrucktreiber, nachdem festgestellt wurde, dass die Lichtintensitätsstufe der Umgebung, in der sich das elektronische Gerät befindet, eine zweite Lichtintensitätsstufe ist, wobei die zweite Lichtintensitätsstufe höher als die erste Lichtintensitätsstufe ist; und
Erzeugen (S1100) eines Fingerabdruckereignisses des zweiten Typs durch den Berührungssensor und Melden des Fingerabdruckereignisses des zweiten Typs durch den Berührungssensor an den Berührungstreiber, nachdem festgestellt wurde, dass die Druckfläche größer als der zweite Schwellenwert ist.

2. Das Verfahren gemäß Anspruch 1, wobei das Verfahren ferner umfasst:
Überspringen (S1110) der Erzeugung eines Fingerabdruckereignisses, nachdem festgestellt wurde, dass die Druckfläche kleiner als der erste Schwellenwert ist.

3. Das Verfahren gemäß einem der Ansprüche 1 oder 2, wobei ein Prozess zur Bestimmung der Lichtintensitätsstufe der Umgebung, in der sich das elektronische Gerät befindet, umfasst:
Bestimmen der Umgebungslichtintensität als erste Lichtintensitätsstufe, wenn die Umgebungslichtintensität des elektronischen Geräts kleiner als ein erster Lichtintensitätsschwellenwert ist;
Bestimmen der Umgebungslichtintensität als zweite Lichtintensitätsstufe, wenn die Umgebungslichtintensität größer oder gleich einem zweiten Lichtintensitätsschwellenwert ist;
Bestimmen, dass die Umgebungslichtintensität von der ersten Lichtintensitätsstufe zur zweiten Lichtintensitätsstufe wechselt, wenn die Umgebungslichtintensität von einem Wert unterhalb der ersten Lichtintensitätsschwelle zu einem Wert oberhalb oder gleich der zweiten Lichtintensitätsschwelle ansteigt; und
Bestimmen, dass die Umgebungslichtintensität von der zweiten Lichtintensitätsstufe zur ersten Lichtintensitätsstufe wechselt, wenn die Umgebungslichtintensität von einem Wert oberhalb oder gleich der zweiten Lichtintensitätsschwelle zu einem Wert unterhalb oder gleich der ersten Lichtintensitätsschwelle abnimmt.

4. Das Verfahren gemäß Anspruch 3, wobei das Verfahren weiterhin umfasst:
Übertragen von Informationen zur Umgebungslichtintensität an ein Empfangsgerät für Umgebungslichtdaten, nachdem festgestellt wurde, dass die Umgebungslichtintensität von der ersten Lichtintensitätsstufe zur zweiten Lichtintensitätsstufe umgewandelt wurde; und
Übertragen der Informationen zur Umgebungslichtintensität an das Empfangsgerät für Umgebungslichtdaten, nachdem festgestellt wurde, dass die Umgebungslichtintensität von der zweiten Lichtintensitätsstufe zur ersten Lichtintensitätsstufe umgewandelt wurde.

5. Das Verfahren gemäß einem der Ansprüche 1 bis 4, wobei das elektronische Gerät einen Umgebungslichtsensor und einen Prozessor umfasst, das Betriebssystem des elektronischen Geräts ein Android-System ist, das Android-System einen Treiber für den Umgebungslichtsensor umfasst, und das Verfahren weiterhin umfasst:
Sammeln von Informationen zur Umgebungslichtintensität des elektronischen Geräts durch den Umgebungslichtsensor und Übertragen der Informationen zur Umgebungslichtintensität an den Treiber für den Umgebungslichtsensor; und
Schreiben der Informationen zur Umgebungslichtintensität durch den Treiber für den Umgebungslichtsensor in den Prozessor.

6. Das Verfahren gemäß Anspruch 5, wobei
das Abfangen des Fingerabdruckereignisses des ersten Typs, nachdem festgestellt wurde, dass die Lichtintensitätsstufe der Umgebung, in der sich das elektronische Gerät befindet, eine erste Lichtintensitätsstufe ist, umfasst:
Erhalten der Informationen zur Umgebungslichtintensität des elektronischen Geräts durch den Berührungstreiber; und
Abfangen des Fingerabdruckereignisses des ersten Typs durch den Berührungstreiber, wenn die Informationen zur Umgebungslichtintensität der ersten Lichtintensitätsstufe entsprechen.

7. Das Verfahren gemäß Anspruch 6, wobei das Erhalten der Informationen zur Umgebungslichtintensität des elektronischen Geräts durch den Berührungstreiber umfasst:
Lesen der im Prozessor gespeicherten Informationen zur Umgebungslichtintensität durch den Berührungstreiber.

8. Das Verfahren gemäß einem der Ansprüche 1 bis 4, wobei die elektronische Vorrichtung einen Umgebungslichtsensor umfasst, das Betriebssystem der elektronischen Vorrichtung ein Android-System ist, das Android-System einen Treiber für den Umgebungslichtsensor, eine Sensorabstraktionsschicht und einen Sensormanager umfasst, und das Verfahren weiterhin umfasst:
Sammeln von Umgebungslichtintensitätsinformationen der elektronischen Vorrichtung durch den Umgebungslichtsensor und Übertragen der Umgebungslichtintensitätsinformationen an den Sensormanager über den Treiber für den Umgebungslichtsensor und die Sensorabstraktionsschicht.

9. Das Verfahren gemäß Anspruch 8, wobei das Android-System weiterhin einen Fingerabdruckdienst umfasst; und
Das Abfangen des Fingerabdruckereignisses des ersten Typs, nachdem festgestellt wurde, dass die Lichtintensitätsstufe einer Umgebung, in der sich die elektronische Vorrichtung befindet, eine erste Lichtintensitätsstufe ist, umfasst:
Abrufen der Umgebungslichtintensitätsinformationen der elektronischen Vorrichtung durch den Fingerabdruckdienst vom Sensormanager nach Empfang des Fingerabdruckereignisses des ersten Typs; und
Abfangen des Fingerabdruckereignisses des ersten Typs durch den Fingerabdruckdienst, wenn die Umgebungslichtintensitätsinformationen der ersten Lichtintensitätsstufe entsprechen.

10. Das Verfahren gemäß Anspruch 8, wobei das Android-System weiterhin einen Fingerabdruckdienst und eine Always-On-Display-Anwendung umfasst; und
Das Abfangen des Fingerabdruckereignisses des ersten Typs, nachdem festgestellt wurde, dass die Lichtintensitätsstufe einer Umgebung, in der sich die elektronische Vorrichtung befindet, eine erste Lichtintensitätsstufe ist, umfasst:
Abrufen der Umgebungslichtintensitätsinformationen der elektronischen Vorrichtung durch den Fingerabdruckdienst vom Sensormanager nach Empfang des Fingerabdruckereignisses des ersten Typs;
Abfangen des Fingerabdruckereignisses des ersten Typs durch den Fingerabdruckdienst, wenn die Umgebungslichtintensitätsinformationen der ersten Lichtintensitätsstufe entsprechen;
Übertragen des Fingerabdruckereignisses des ersten Typs durch den Fingerabdruckdienst an die Always-On-Display-Anwendung;
Abrufen der Umgebungslichtintensitätsinformationen der elektronischen Vorrichtung durch die Always-On-Display-Anwendung vom Sensormanager nach Empfang des Fingerabdruckereignisses des ersten Typs; und
Abfangen des Fingerabdruckereignisses des ersten Typs durch die Always-On-Display-Anwendung, wenn die Umgebungslichtintensitätsinformationen der ersten Lichtintensitätsstufe entsprechen.

11. Das Verfahren gemäß Anspruch 9 oder 10, wobei das Abrufen der Umgebungslichtintensitätsinformationen der elektronischen Vorrichtung vom Sensormanager umfasst:
Aufrufen einer Schnittstelle des Sensormanagers, um die Informationen zur Umgebungslichtintensität auszulesen.

12. Ein elektronisches Gerät, umfassend einen oder mehrere Prozessoren (110), einen Speicher (120) und einen Touchscreen, wobei der Speicher so konfiguriert ist, dass er Programmcode speichert; und der Prozessor so konfiguriert ist, dass er den Programmcode ausführt, um das elektronische Gerät in die Lage zu versetzen, das Blendanzeigeverfahren gemäß einem der Ansprüche 1 bis 11 zu implementieren.

13. Ein computerlesbares Speichermedium, wobei das computerlesbare Speichermedium eine Anweisung speichert, und wenn die Anweisung auf einem elektronischen Gerät ausgeführt wird, wird das elektronische Gerät in die Lage versetzt, das Blendanzeigeverfahren gemäß einem der Ansprüche 1 bis 11 auszuführen.

## Revendications

1. Un procédé d'affichage de flare pour limiter les effets d'une fuite de flare, appliqué à un dispositif électronique, le procédé comprenant :
détecter (S110), par un capteur tactile du dispositif électronique, une opération de pression dans une région de détection d'empreinte digitale d'un doigt appuyant sur la région de détection tactile ;
déterminer (S120), par le capteur tactile, une zone de pression de l'opération de pression, où la zone de pression est une zone de contact entre le doigt et la région de détection tactile ;
déterminer (S120), par le capteur tactile, si la zone de pression est supérieure ou égale à un premier seuil ;
déterminer (S130), par le capteur tactile, si la zone de pression est inférieure à un deuxième seuil ;
générer (S140), par le capteur tactile, un événement d'empreinte digitale de premier type et signaler cet événement au pilote tactile lorsqu'il est déterminé que la zone de pression est supérieure ou égale au premier seuil et inférieure au deuxième seuil ;
intercepter (S180), par le pilote tactile, l'événement d'empreinte digitale de premier type après qu'il est déterminé qu'un niveau d'intensité lumineuse de l'environnement dans lequel se trouve le dispositif électronique est un premier niveau d'intensité lumineuse ;
signaler (S190), par le pilote tactile au pilote d'empreinte digitale, l'événement d'empreinte digitale de premier type après qu'il est déterminé que le niveau d'intensité lumineuse de l'environnement dans lequel se trouve le dispositif électronique est un deuxième niveau d'intensité lumineuse, où le deuxième niveau d'intensité lumineuse est supérieur au premier niveau d'intensité lumineuse ;
générer (S1100), par le capteur tactile, un événement d'empreinte digitale de deuxième type, et signaler, par le capteur tactile au pilote tactile, cet événement après qu'il est déterminé que la zone de pression est supérieure au deuxième seuil.

2. Le procédé selon la revendication 1, où le procédé comprend en outre :
sauter (S1110) la génération d'un événement d'empreinte digitale après qu'il est déterminé que la zone de pression est inférieure au premier seuil.

3. Le procédé selon l'une quelconque des revendications 1 ou 2, où un processus de détermination du niveau d'intensité lumineuse de l'environnement dans lequel se trouve le dispositif électronique comprend :
déterminer l'intensité lumineuse ambiante comme étant le premier niveau d'intensité lumineuse si l'intensité lumineuse ambiante du dispositif électronique est inférieure à un premier seuil d'intensité lumineuse ;
déterminer l'intensité lumineuse ambiante comme étant le deuxième niveau d'intensité lumineuse si l'intensité lumineuse ambiante est supérieure ou égale à un deuxième seuil d'intensité lumineuse ;
déterminer que l'intensité lumineuse ambiante passe du premier niveau d'intensité lumineuse au deuxième niveau d'intensité lumineuse si l'intensité lumineuse ambiante augmente d'une valeur inférieure au seuil d'intensité lumineuse du premier niveau à une valeur supérieure ou égale au seuil d'intensité lumineuse du deuxième niveau ; et
déterminer que l'intensité lumineuse ambiante passe du deuxième niveau d'intensité lumineuse au premier niveau d'intensité lumineuse si l'intensité lumineuse ambiante diminue d'une valeur supérieure ou égale au seuil d'intensité lumineuse du deuxième niveau à une valeur inférieure ou égale au seuil d'intensité lumineuse du premier niveau.

4. Le procédé selon la revendication 3, dans lequel le procédé comprend en outre :
transmettre des informations sur l'intensité lumineuse ambiante à une extrémité réceptrice des données de lumière ambiante après avoir détecté que l'intensité lumineuse ambiante est convertie du premier niveau d'intensité lumineuse au deuxième niveau d'intensité lumineuse ; et
transmettre les informations sur l'intensité lumineuse ambiante à l'extrémité réceptrice des données de lumière ambiante après avoir détecté que l'intensité lumineuse ambiante est convertie du deuxième niveau d'intensité lumineuse au premier niveau d'intensité lumineuse.

5. Le procédé selon l'une quelconque des revendications 1 à 4, dans lequel le dispositif électronique comprend un capteur de lumière ambiante et un processeur, le système d'exploitation du dispositif électronique est un système Android, le système Android comprend un pilote de capteur de lumière ambiante, et le procédé comprend en outre :
collecter, par le capteur de lumière ambiante, des informations sur l'intensité lumineuse ambiante du dispositif électronique, et transmettre les informations sur l'intensité lumineuse ambiante au pilote de capteur de lumière ambiante ; et
écrire, par le pilote de capteur de lumière ambiante, les informations sur l'intensité lumineuse ambiante dans le processeur.

6. Le procédé selon la revendication 5, dans lequel
l'interception de l'événement d'empreinte digitale de premier type après avoir déterminé qu'un niveau d'intensité lumineuse de l'environnement dans lequel se trouve le dispositif électronique est un premier niveau d'intensité lumineuse comprend :
obtenir, par le pilote tactile, les informations sur l'intensité lumineuse ambiante du dispositif électronique ; et
intercepter, par le pilote tactile, l'événement d'empreinte digitale de premier type si les informations sur l'intensité lumineuse ambiante correspondent au premier niveau d'intensité lumineuse.

7. Le procédé selon la revendication 6, dans lequel l'obtention, par le pilote tactile, des informations sur l'intensité lumineuse ambiante du dispositif électronique comprend :
lire, par le pilote tactile, les informations sur l'intensité lumineuse ambiante stockées dans le processeur.

8. La méthode selon l'une quelconque des revendications 1 à 4, dans laquelle le dispositif électronique comprend un capteur de lumière ambiante, un système d'exploitation du dispositif électronique est un système Android, le système Android comprend un pilote de capteur de lumière ambiante, une couche d'abstraction de capteur et un gestionnaire de capteur, et la méthode comprend en outre :
collecter, par le capteur de lumière ambiante, des informations sur l'intensité lumineuse ambiante du dispositif électronique, et transmettre les informations sur l'intensité lumineuse ambiante au gestionnaire de capteur via le pilote de capteur de lumière ambiante et la couche d'abstraction de capteur.

9. La méthode selon la revendication 8, dans laquelle le système Android comprend en outre un service d'empreintes digitales ; et
l'interception de l'événement d'empreinte digitale de premier type après qu'il a été déterminé qu'un niveau d'intensité lumineuse d'un environnement dans lequel le dispositif électronique est situé est un premier niveau d'intensité lumineuse comprend :
obtenir, par le service d'empreintes digitales, les informations sur l'intensité lumineuse ambiante du dispositif électronique auprès du gestionnaire de capteur après avoir reçu l'événement d'empreinte digitale de premier type ; et
intercepter, par le service d'empreintes digitales, l'événement d'empreinte digitale de premier type si les informations sur l'intensité lumineuse ambiante correspondent au premier niveau d'intensité lumineuse.

10. La méthode selon la revendication 8, dans laquelle le système Android comprend en outre un service d'empreintes digitales et une application d'affichage permanent ; et
l'interception de l'événement d'empreinte digitale de premier type après qu'il a été déterminé qu'un niveau d'intensité lumineuse d'un environnement dans lequel le dispositif électronique est situé est un premier niveau d'intensité lumineuse comprend :
obtenir, par le service d'empreintes digitales, les informations sur l'intensité lumineuse ambiante du dispositif électronique auprès du gestionnaire de capteur après avoir reçu l'événement d'empreinte digitale de premier type ;
intercepter, par le service d'empreintes digitales, l'événement d'empreinte digitale de premier type si les informations sur l'intensité lumineuse ambiante correspondent au premier niveau d'intensité lumineuse ;
transmettre, par le service d'empreintes digitales, l'événement d'empreinte digitale de premier type à l'application d'affichage permanent ;
obtenir, par l'application d'affichage permanent, les informations sur l'intensité lumineuse ambiante du dispositif électronique auprès du gestionnaire de capteur après avoir reçu l'événement d'empreinte digitale de premier type ; et
intercepter, par l'application d'affichage permanent, l'événement d'empreinte digitale de premier type si les informations sur l'intensité lumineuse ambiante correspondent au premier niveau d'intensité lumineuse.

11. La méthode selon la revendication 9 ou 10, dans laquelle l'obtention des informations sur l'intensité lumineuse ambiante du dispositif électronique auprès du gestionnaire de capteur comprend :
invoquer une interface du gestionnaire de capteurs pour lire les informations sur l'intensité de la lumière ambiante.

12. Un dispositif électronique, comprenant un ou plusieurs processeurs (110), une mémoire (120) et un écran tactile, où la mémoire est configurée pour stocker le code du programme ; et le processeur est configuré pour exécuter le code du programme afin de permettre au dispositif électronique de mettre en œuvre la méthode d'affichage de l'éblouissement selon l'une quelconque des revendications 1 à 11.

13. Un support de stockage lisible par ordinateur, où le support de stockage lisible par ordinateur stocke une instruction, et lorsque l'instruction est exécutée sur un dispositif électronique, le dispositif électronique est activé pour effectuer la méthode d'affichage de l'éblouissement selon l'une quelconque des revendications 1 à 11.
